# EUROPÄISCHE PATENTSCHRIFT

(11) **EP 2 928 712 B1**
(45) Veröffentlichungstag und Bekanntmachung des Hinweises auf die Patenterteilung: **25.09.2019**
(21) Anmeldenummer: 13815411.7
(22) Anmeldetag: 09.12.2013
(51) Int. Cl.: B60J 1/20

(54) **SCHUTZVORRICHTUNG, INSBESONDERE BESCHATTUNGSVORRICHTUNG, FÜR EINEN FAHRZEUGINNENRAUM EINES KRAFTFAHRZEUGS**
PROTECTIVE DEVICE, IN PARTICULAR SHADING DEVICE, FOR A VEHICLE INTERIOR OF A MOTOR VEHICLE
DISPOSITIF DE PROTECTION, EN PARTICULIER DISPOSITIF DE PROTECTION CONTRE LE SOLEIL POUR L'HABITACLE D'UN VÉHICULE AUTOMOBILE

(30) Priorität: 10.12.2012 DE 102012222658
(43) Veröffentlichungstag der Anmeldung: 14.10.2015
(73) Patentinhaber: BOS GmbH & Co. KG, 73760 Ostfildern (DE)
(72) Erfinder: HINTENNACH, Markus, 73666 Baltmannsweiler (DE); STARZMANN, Bernd, 73666 Hohengehren (DE); LEKAR, Jan, 73760 Ostfildern (DE)
(74) Vertreter: Patentanwälte Ruff, Wilhelm, Beier, Dauster & Partner mbB
(86) Internationale Anmeldenummer: PCT/EP2013/075992
(87) Internationale Veröffentlichungsnummer: WO 2014/090759

(56) Entgegenhaltungen:
- EP-A1- 1 188 591
- EP-A2- 1 582 386
- DE-A1-102004 041 385
- US-A- 2 491 765

## Beschreibung

Die Erfindung betrifft eine Schutzvorrichtung, insbesondere eine Beschattungsvorrichtung, für einen Fahrzeuginnenraum eines Kraftfahrzeugs mit einem flexiblen Flächengebilde, das zwischen einer kompakt abgelegten Ruheposition und wenigstens einer aufgespannten Funktionsposition beweglich gelagert ist, sowie mit seitlichen Führungsschienen, die in fahrzeugfest montierter Betriebsstellung nichtparallel zueinander verlaufen und in denen ein Auszugprofil des Flächengebildes geführt ist, wobei jede Führungsschiene ein Blendenprofil zum Überdecken eines Seitenrandes des aufgespannten Flächengebildes umfasst.

Eine derartige Schutzvorrichtung ist in Form einer Beschattungsvorrichtung für eine Seitenscheibe eines Personenkraftwagens aus der DE 10 2004 041 385 A1 und der EP 1 188 591 A1 bekannt. Die bekannte Beschattungsvorrichtung weist ein flexibles Flächengebilde auf, das zwischen einer kompakt abgelegten Ruheposition und einer vor der Seitenscheibe aufgespannten Funktionsposition beweglich gelagert ist. Das flexible Flächengebilde weist an seinen gegenüberliegenden Seitenrändern jeweils eine Verdickung auf, die in seitlichen Führungsschienen abgestützt ist. Ein vorderer Stirnendbereich des Flächengebildes ist an einem Auszugprofil befestigt, das in den seitlichen Führungsschienen mittels einer Antriebseinheit verschiebbar gelagert ist. Die Antriebseinheit weist längs erstreckte Zug-Druckmittel auf, die an dem Auszugprofil angreifen und innerhalb der Führungsschienen verlegt sind.

Aufgabe der Erfindung ist es, eine Schutzvorrichtung der eingangs genannten Art zu schaffen, die eine gegenüber dem Stand der Technik verbesserte Funktion aufweist.

Diese Aufgabe wird dadurch gelöst, dass das Blendenprofil einen längserstreckten Führungsschlitz für den Seitenrand des Flächengebildes bildet, dessen Breite so groß gewählt ist, dass der Seitenrand über seine gesamte Länge in aufgespannter Funktionsposition des Flächengebildes in das Blendenprofil hineinragt. Die Breite des Führungsschlitzes des Blendenprofils ist daher so groß gewählt, dass auch bei abweichender Linienführung zwischen dem Blendenprofil bzw. dem Führungsschlitz - in Längsrichtung des Führungsschlitzes gesehen - relativ zur Längsausrichtung des Seitenrandes des Flächengebildes dieser Seitenrand immer durch das Blendenprofil, d.h. den Führungsschlitz des Blendenprofils, verdeckt ist. Dadurch ist gewährleistet, dass zwischen Blendenprofil und Flächengebilde kein Sichtspalt verbleibt, wenn das flexible Flächengebilde sich in seiner ausgezogenen Funktionsposition befindet. Die erfindungsgemäße Lösung eignet sich daher sowohl für Schutzvorrichtungen mit seitlichen Führungsschienen, deren in Längserstreckung gesehene Krümmung von einer Längserstreckung der Seitenränder des Flächengebildes in aufgespannter Funktionsposition des Flächengebildes abweicht, als auch für geradlinig ausgerichtete Führungsschienen, die nichtparallel zueinander und/oder nichtparallel zu dieser Längserstreckung des jeweiligen Seitenrandes des Flächengebildes sind.

Erfindungsgemäß ist der Führungsschlitz jedes Blendenprofils in seiner Längsrichtung und in seiner Querrichtung trichterförmig verjüngt. Dadurch ergibt sich eine Einführhilfe für die Seitenränder des Flächengebildes beim Überführen des Flächengebildes aus seiner Ruheposition in die aufgespannte Funktionsposition. Der Führungsschlitz des Blendenprofils, in den der jeweilige Seitenrand des Flächengebildes eintauchen soll, verjüngt sich in Längsrichtung und damit in Auszug¬richtung des Flächengebildes, und er verjüngt sich in Querrichtung, d.h. quer zur Auszugrichtung des Flächengebildes.

Die der Erfindung zugrundeliegende Aufgabe wird auch dadurch gelöst, dass jedem Seitenrand des Flächengebildes ein seitliches Führungsband zugeordnet ist, das über die Länge des jeweiligen Seitenrandes erstreckt ist, und dass das Blendenprofil ein das Führungsband aufnehmendes Führungsprofil umfasst, in dem das Führungsband permanent verbleibt. Die beiden Führungsbänder auf den gegenüberliegenden Längsseiten des Flächengebildes, die mit dem jeweiligen Seitenrand des Flächengebildes verbunden sind, bilden in Verbindung mit dem als Hohlprofile gestalteten Führungsprofilen einen Querrückhalt für das Flächengebilde, so dass das Flächengebilde mit seinen Seitenrändern nicht aus den Führungsschienen und damit aus den Blendenprofilen quer herausgezogen werden kann. Die Führungsbänder im Bereich der Seitenränder des Flächengebildes sind permanent in das entsprechende Führungsprofil des Blendenprofils eingefädelt, unabhängig davon, ob das Flächengebilde sich in seiner Ruheposition oder in seiner Funktionsposition befindet. Die mit den Seitenrändern verbundenen Führungsbänder bilden quer zur Auszugrichtung einen formschlüssigen Rückhalt für das Flächengebilde.

In weiterer Ausgestaltung der Erfindung weist ein Aufnahmequerschnitt des Führungsprofils in Querrichtung des Führungsbandes eine Breite auf, die um einen Ausgleichsweg breiter ist als eine Breite des Führungsbandes, wobei der Ausgleichsweg als Funktion des Winkels der nichtparallelen Führungsschienen zur Auszugrichtung des Flächengebildes bestimmt ist. Der Ausgleichsweg berücksichtigt die notwendige Toleranz zwischen der Erstreckung des Seitenrandes des Flächengebildes in ausgezogener Funktionsposition und dem nicht parallelen Verlauf der stationär angeordneten Blendenprofile.

In weiterer Ausgestaltung der Erfindung ist das Hohlprofil in Querrichtung beweglich gelagert, und es sind Federmittel vorgesehen, die das Hohlprofil in Quer¬richtung in einer Mittellage gespannt halten. Aus dieser Mittellage kann das Hohlprofil, das das Führungsband aufnimmt, je nach Abweichung zwischen der durch das stationäre Blendenprofil definierten Führungsbahn und der tatsächlichen Auszugbahn des zugeordneten Seitenrandes des Flächengebildes nachgeführt werden. Vorzugweise liegt ein maximaler Ausgleichsweg im Bereich zwischen 10 und 20 mm, vorteilhaft bei 15 mm. Dieser Ausgleichsweg in Querrichtung ist bezogen auf eine übliche Ausfahrlänge bei Beschattungsvorrichtungen für Seitenscheiben von Personenkraftwagen zwischen ca. 300 und 400 mm.

Die der Erfindung zugrundeliegende Aufgabe wird auch dadurch gelöst, dass in dem Blendenprofil Klemmmittel vorgesehen sind, die einen Seitenrand des Flächengebildes in ausgefahrener Funktionsposition in Querrichtung festklemmen, wobei die Klemmmittel wenigstens eine in Querrichtung bewegliche Klemmleiste umfassen, die sich innerhalb des Blendenprofils zumindest weitgehend über eine Auszuglänge des Flächengebildes erstreckt. Der wenigstens einen Klemmleiste sind vorzugsweise mechanisch wirkende Stellmittel zugeordnet, die die Klemmleiste zwischen einer Freigabestellung für den zugeordneten Seitenrand des Flächengebildes und einer Klemmstellung bewegen. Vorzugsweise werden die Stellmittel abhängig vom Erreichen der ausgezogenen Funktionsposition durch das Auszugprofil gesteuert, wobei die wenigstens eine Klemmleiste erst nach dem Erreichen der ausgezogenen Funktionsposition des Flächengebildes in die Klemmposition überführt wird.

Die der Erfindung zugrundeliegende Aufgabe wird auch dadurch gelöst, dass die beiden Seitenränder des Flächengebildes über ihre Länge mit längs erstreckten, elastischen Spannmitteln versehen sind, die in Längsrichtung der Seitenränder wirksam sind, dass stationäre Überwölbungsabschnitte vorgesehen sind, über die das Flächengebilde in aufgespannter Funktionsposition erstreckt ist, und dass die elastischen Spannmittel in ausgezogener Funktionsposition jeweils außenseitig an den Überwölbungsabschnitten vorbeigeführt sind. Dadurch wird das Flächengebilde in aufgespannter Funktionsposition in Querrichtung über die Überwölbungsabschnitte umgelenkt und durch die längserstreckten, elastischen Spannmittel in dieser über die Überwölbungsabschnitte gespannten Stellung gesichert.

In Ausgestaltung der Erfindung sind die Überwölbungsabschnitte im Bereich der Blendenprofile der gegenüberliegenden Führungsschienen angeordnet. Die Überwölbungsabschnitte sind demzufolge innerhalb der Blendenprofile angeordnet oder zumindest durch die Blendenprofile verdeckt.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematischer Darstellung einen Fahrzeuginnenraum mit einer Ausführungsform einer erfindungsgemäßen Schutzvorrichtung in Form einer Beschattungsvorrichtung für eine Seitenscheibe,
- Fig. 2: in vergrößerter schematischer Darstellung einen Ausschnitt der Beschattungsvorrichtung nach Fig. 1,
- Fig. 3: schematisch eine Querschnittsdarstellung der seitlichen Führungsschiene gemäß Fig. 2,
- Fig. 4: in isometrischer Darstellung eine weitere Ausführungsform einer Beschattungsvorrichtung ähnlich den Fig. 2 und 3,
- Fig. 5: eine von innen her gesehene Seitenansicht eines Teilbereiches einer Führungsschiene nach Fig. 4,
- Fig. 6: in schematischer Querschnittsdarstellung ein Führungsschienenprofil ähnlich den Fig. 4 und 5,
- Fig. 7: in vergrößerter schematischer Darstellung einen Teilbereich einer weiteren Ausführungsform einer erfindungsgemäßen Beschattungsvorrichtung,
- Fig. 8: eine schematische Querschnittsdarstellung der Beschattungsvorrichtung nach Fig. 7,
- Fig. 9: in vergrößerter schematischer Darstellung einen Ausschnitt eines Führungsschienenabschnittes der Beschattungsvorrichtung nach den Fig. 7 und 8,
- Fig. 10: schematisch einen Ausschnitt einer weiteren Ausführungsform einer erfindungsgemäßen Beschattungsvorrichtung im Bereich einer Führungsschiene,
- Fig. 11a und 11b: schematisch in einem Ausschnitt eine Querschnittsdarstellung einer weiteren Ausführungsform einer erfindungsgemäßen Beschattungsvorrichtung in zwei unterschiedlichen Funktionszuständen,
- Fig. 12a und 12b: in schematischer Darstellung eine weitere Ausführungsform einer erfindungsgemäßen Beschattungsvorrichtung in zwei unterschiedlichen Funktionszuständen mit in der Zeichnung integrierten vergrößerten Querschnittsdarstellungen eines Führungsschienenprofils,
- Fig. 13: in schematischer Darstellung einen Ausschnitt einer weiteren Ausführungsform einer erfindungsgemäßen Beschattungsvorrichtung,
- Fig. 14: schematisch in einer Querschnittsdarstellung die Ausführungsform nach Fig. 13,
- Fig. 15: schematisch eine weitere Ausführungsform einer erfindungsgemäßen Beschattungsvorrichtung und
- Fig. 16: schematisch eine Seitenansicht eines Teilbereichs der Beschattungsvorrichtung nach Fig. 15.

Ein Fahrzeuginnenraum F eines Personenkraftwagens weist fahrer- und beifahrerseitige Fahrzeugsitze sowie eine Fondsitzbank 1 auf. An gegenüberliegenden Seitenflächen des Fahrzeuginnenraumes F ist im Bereich der Fondsitzbank 1 jeweils eine Seitenscheibe 2 vorgesehen, die mittels einer Beschattungsvorrichtung verdeckt werden kann. Die Beschattungsvorrichtung weist ein flexibles Flächengebilde aus einem Licht- und/oder Wärmestrahlung absorbierenden Flächenmaterial auf, das auf einer Wickelwelle 4 auf- und abwickelbar gehalten ist. Das flexible Flächengebilde, das für die erfindungsgemäße Lösung einsetzbar ist, kann ergänzend oder alternativ mit Schalldämpfungseigenschaften versehen sein, wobei das Flächenmaterial ein- oder mehrlagig gestaltet sein kann. Die Wickelwelle 4 ist in einer Seitenverkleidung des Fahrzeuginnenraumes F unterhalb eines Fensterausschnittes für die Seitenscheibe 2 räumlich integriert. Das flexible Flächengebilde weist an seinem - in Auszugrichtung nach oben gesehen - vorderen Stirnendbereich ein formstabiles Auszugprofil 6 auf, das mit Hilfe von Antriebsmitteln 8 nach oben in eine aufgespannte Funktionsposition des Flächengebildes 5 und nach unten in Richtung einer aufgewickelten Ruheposition des Flächengebildes 5 verlagerbar ist. Das Auszugprofil 6 ist in den gegenüberliegenden seitlichen Führungsschienen 3 geführt. Die gegenüberliegenden, fahrzeugfesten Führungsschienen 3 sind nichtparallel zueinander ausgerichtet. Jede Führungsschiene 3 weist einen Profilbereich 10 zur Führung einer als Antriebsübertragungsmittel dienenden Flexwelle 8 auf, die an einem teleskopförmig verschiebbaren Verlängerungsfortsatz 7 des Auszugprofils 6 angreift. Zudem ist jede Führungsschiene 3 zum flexiblen Flächengebilde 5 hin, d.h. zur Scheibenmitte der Seitenscheibe 2 hin gerichtet, mit einem Blendenprofil 9 versehen, das einen Hohlraum zur Aufnahme jeweils eines Seitenrandes 12 des flexiblen Flächengebildes 5 bildet. Der Seitenrand 12 des flexiblen Flächengebildes 5 ragt durch einen als Führungsschlitz im Sinne der Erfindung dienenden Längsschlitz 11 in den Hohlraum des Blendenprofils 9 hinein, so dass sich in ausgezogener Funktionsposition des Flächengebildes 5 zwischen dem Seitenrand 12 und dem Blendenprofil 9 der jeweiligen Führungsschiene 3 kein Sichtspalt ergibt. Das Blendenprofil 9 ist derart bezüglich der Breite seines Hohlraumes dimensioniert, dass Unterschiede zwischen der stationären Ausrichtung der Führungsschiene 3 und der Bewegungsbahn des Seitenrandes 12 bei einem Ausziehen oder Einfahren des flexiblen Flächengebildes 5 ausgeglichen werden können.

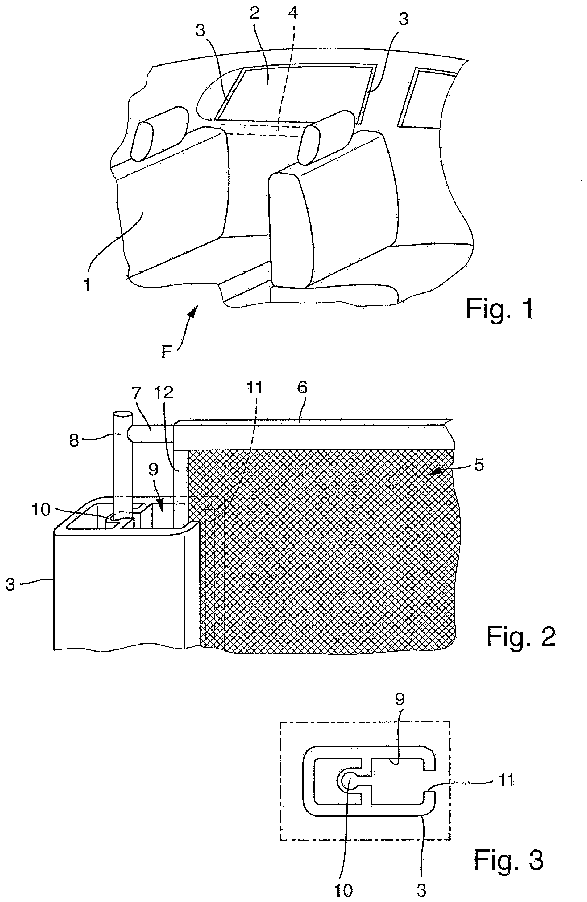

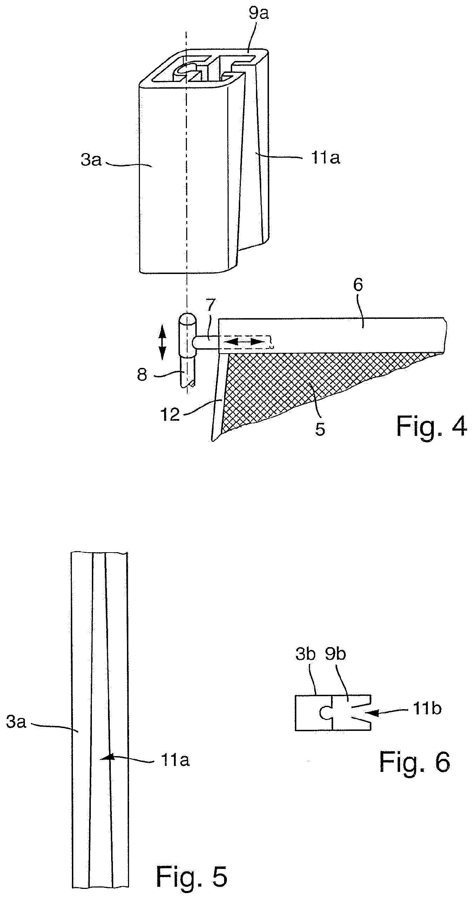

Um sicherzustellen, dass ein Seitenrand 12 des flexiblen Flächengebildes 5 bei einem Hochfahren des Auszugprofils 6 aus der Ruheposition in die ausgezogene Funktionsposition in das Blendenprofil 9a der Führungsschiene 3a eingefädelt wird, ist ein Längsschlitz 11a des Blendenprofils 9a zumindest über einen Teilbereich seiner Länge trichterförmig zulaufend gestaltet. Dies ist anhand der in Fig. 4 und 5 dargestellten Ausführungsform erkennbar. Im Übrigen unterscheidet sich die Beschattungsvorrichtung nach den Fig. 4 und 5 nicht von der zuvor anhand der Fig. 1 und 2 beschriebenen Beschattungsvorrichtung, so dass zur Vermeidung von Wiederholungen auf die Beschreibung zu den Fig. 1 und 2 verwiesen wird.

Bei einer weiteren Beschattungsvorrichtung ähnlich den Fig. 1 bis 4 ist ein Führungsschienenprofil 3b ebenfalls mit einem Blendenprofil 9b versehen, das einen Hohlraum zur Aufnahme eines Seitenrandes eines flexiblen Flächengebildes aufweist. Dieser Hohlraum ist zur gegenüberliegenden Führungsschiene 3b (nicht dargestellt) hin offen mittels eines Längsschlitzes 11b, der in Querrichtung zum Inneren des Hohlraumes des Blendenprofils 9b hin trichterartig verjüngt gestaltet ist. Diese trichterförmige Verjüngung in Querrichtung ist erfindungsgemäß mit der in Längsrichtung verlaufenden Verjüngung nach oben, wie sie anhand der Fig. 4 und 5 dargestellt ist, kombiniert.

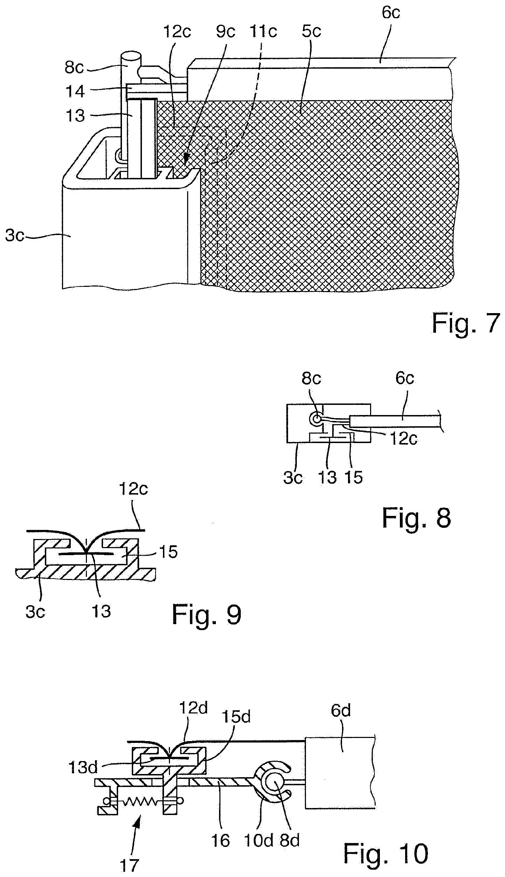

Bei der Ausführungsform nach den Fig. 7 bis 9 ist die Beschattungsvorrichtung grundsätzlich in gleicher Weise gestaltet und angeordnet, wie dies anhand der Ausführungsform nach den Fig. 1 und 2 beschrieben worden ist. Nachfolgend wird zur Vermeidung von Wiederholungen daher lediglich auf die Unterschiede eingegangen. Das flexible Flächengebilde 5c wird mittels des an seinem vorderen Stirnendbereich fest angeordneten, formstabilen Auszugprofils 6c nach oben ausgezogen oder nach unten hin abgesenkt. Das Auszugprofil 6c ist mittels zweier Antriebsübertragungsmittel in Form von Flexwellen 8c in den beiden gegenüberliegenden Führungsschienen 3c gehalten und in Längsrichtung der Führungsschienen 3c verlagerbar. Zum Ausgleich der zur Auszugrichtung des Auszugprofils 6c hin nichtparallelen Führungsschienen 3c ist im Auszugprofil 6c - wie bei der Ausführungsform nach den Fig. 1 und 2 - an den gegenüberliegenden Stirnseiten jeweils ein teleskopförmig verlagerbarer Verlängerungsabschnitt zugeordnet, an dem ein Endbereich des jeweiligen Antriebsübertragungsmittels, d.h. der Flexwelle 8c, angreift.

Die gegenüberliegenden Seitenränder 12c des flexiblen Flächengebildes 5c, die sich über die gesamte Länge des flexiblen Flächengebildes 5c erstrecken, sind mit jeweils einem Führungsband 13 versehen, das in einem Führungsprofilabschnitt 15 innerhalb des Blendenprofils 9c längs verschiebbar geführt ist. Jedes Führungsband 13 ist mittels eines mittig angeordneten Stegbereiches mit dem jeweiligen Seitenrand 12c verbunden, wobei der Stegbereich durch einen zum Hohlraum des Blendenprofils 9c hin offenen Längsschlitz hindurchragt. Das Führungsband 13 kann vorzugsweise eine höhere Formstabilität aufweisen als der Seitenrand 12c des flexiblen Flächengebildes 5c. Bevorzugt ist das Führungsband 13 als Teflonband gestaltet. An seinem in Auszugrichtung vorderen Stirnbereich ist das Führungsband 13 mit einem Einführsteg 14 versehen, der gegenüber der Führungsbahn des Führungsbandes 13 in den Hohlraum des Blendenprofils 9c hinein zurückversetzt ist und zur Stabilisierung des Stirnbereiches des Führungsbandes 13 beiträgt. Wie anhand der Fig. 7 bis 9 erkennbar ist, ist die Breite des Führungsbandes 13 geringer als eine Breite des Führungsprofilabschnittes 15 innerhalb des Blendenprofils 9c. Das Führungsband 13 weist in einer Mittellage zu den außen- und innenliegenden Randbereichen des Führungsprofilabschnittes 15 hin jeweils einen Abstand auf, der dem Ausgleichsweg zwischen der Ausrichtung der Führungsschiene 3c und der Bewegungsbahn des Seitenrandes 12c während eines Aus- oder Einfahrvorganges des flexiblen Flächengebildes 5c entspricht. Das mit dem Seitenrand 12c des flexiblen Flächengebildes 5c fest verbundene Führungsband 13 gewährleistet, dass das flexible Flächengebilde 5c mit seinen gegenüberliegenden Seitenrändern 12c in aufgespannter Funktionsposition, in der die Seitenscheibe 4 beschattet wird, nicht aus den Blendenprofilen 9c herausgezogen werden kann. Diese Gefahr besteht insbesondere, falls während der Fahrt des Personenkraftwagens die entsprechende Seitenscheibe 4 geöffnet wird und die hierdurch entstehenden Zugströmungen auf das flexible Flächengebilde 5c wirken.

Bei der Ausführungsform nach Fig. 10 wird ein Ausgleichsweg für das Führungsband 13d des jeweiligen Seitenrandes 12d nicht durch eine entsprechend breitere Gestaltung des Führungsprofiles relativ zur Breite des Führungsbandes 13d erzielt, wie dies bei der Ausführungsform nach den Fig. 7 bis 9 der Fall war. Vielmehr ist der Führungsprofilabschnitt 15d bei der Ausführungsform nach Fig. 10 in Querrichtung relativ zur fahrzeugfesten Führungsschiene beweglich gelagert. Die in Fig. 10 nicht dargestellte, fahrzeugfeste Führungsschiene weist den stationären, d.h. fahrzeugfesten, Profilbereich 10d auf, der für die Verlagerung des Antriebsübertragungsmittels 8d vorgesehen ist. Dieser fahrzeugfeste Profilbereich 10d der Führungsschiene ist mit einem quer nach außen ragenden Stegprofilabschnitt 16 versehen, in dem der Führungsprofilabschnitt 15d quer verschiebbar gelagert ist. Eine Federanordnung 17, die zwischen dem Stegprofilabschnitt 16 und dem Führungsprofilabschnitt 15d wirksam ist, zieht den Führungsprofilabschnitt 15d permanent seitlich nach außen, wodurch auf das Führungsband 13d und den Seitenrand 12d des flexiblen Flächengebildes eine Querspannung nach außen aufgebracht wird.

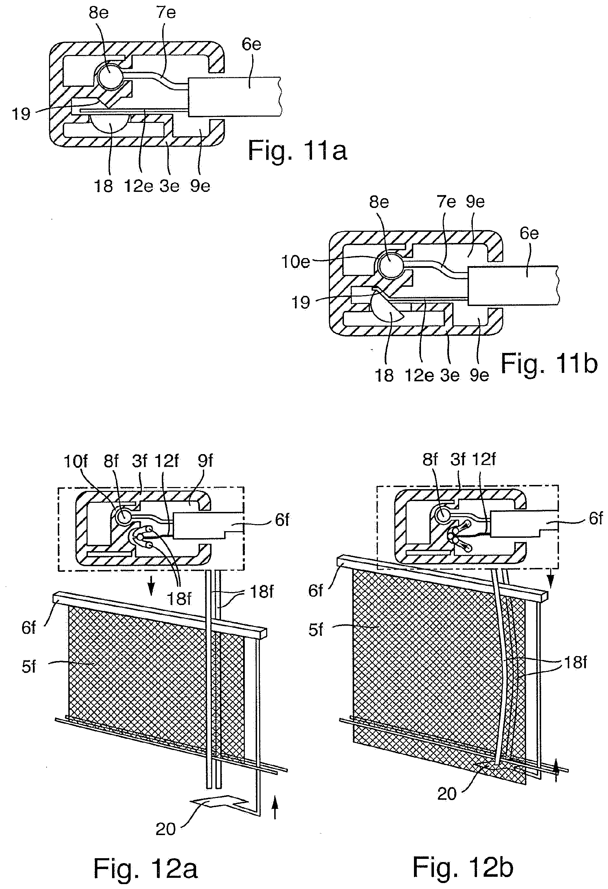

Bei der Ausführungsform einer Beschattungsvorrichtung nach den Fig. 11aA und 11b ist dem flexiblen Flächengebilde und seinem Auszugprofil 6e auf den gegenüberliegenden Seiten jeweils eine Führungsschiene 3e zugeordnet, die mit einem einen Hohlraum bildenden Blendenprofil 9e sowie einem Profilbereich 10e für das Antriebsübertragungsmittel 8e versehen ist. Funktionsgleiche Teile relativ zu den zuvor beschriebenen Ausführungsformen sind mit gleichen Bezugszeichen, jedoch unter Hinzufügung des Buchstabens e versehen. Zur Vermeidung von Wiederholungen wird auch bei dieser Ausführungsform einer Beschattungsvorrichtung lediglich auf die maßgeblichen Unterschiede zu den zuvor genannten Ausführungsformen eingegangen. Bei der Ausführungsform nach den Fig. 11a und 11b wird der jeweilige Seitenrand 12e lose innerhalb des Hohlraumes des Blendenprofils 9e während eines entsprechenden Ausfahrvorgangs des Auszugprofiles 6e in die ausgezogene Funktionsposition geführt. Der Seitenrand 12e verläuft zwischen einer beweglichen Klemmleiste 18 und einem der Klemmleiste 18 zugeordneten Anschlagsteg 19 mit dreieckförmigem Querschnittsprofil. Der Anschlagsteg 19 ist fester Teil des Hohlprofils der Führungsschiene 3e und in dem Hohlraum des Blendenprofils 9e integriert. Die Klemmleiste 18 erstreckt sich über nahezu eine gesamte Länge des Auszugwegs des flexiblen Flächengebildes. Die Klemmleiste ist um ihre Längsachse verschwenkbar zwischen einer Freigabestellung gemäß Fig. 11a und einer Klemmstellung gemäß Fig. 11b innerhalb der Führungsschiene gelagert. In der Freigabestellung schließt eine Anlagefläche der Klemmleiste 18 zum Seitenrand 12e hin etwa fluchtend mit entsprechenden Hohlprofilabschnitten innerhalb des Blendenprofiles 9e ab. In der Klemmposition ist die Klemmleiste 18 gemäß der Darstellung nach Fig. 11b im Uhrzeigersinn nach oben verschwenkt, wodurch der Seitenrand 12e zwischen der entsprechenden Anlagefläche der Klemmleiste 18 und einer Seitenflanke des Anschlagsteges 19 eingeklemmt ist. Hierdurch wird auf den Seitenrand 12e und damit auf das gesamte flexible Flächengebilde eine Zugbelastung in Querrichtung nach außen erzeugt, wie dem Pfeil in Fig. 11b zu entnehmen ist.

Bei der Ausführungsform nach den Fig. 12a und 12b wird eine ähnliche Klemmung und Zugwirkung nach außen auf das flexible Flächengebilde 5f erreicht, wie dies zuvor anhand der Ausführungsform gemäß den Fig. 11a und 11b beschrieben worden ist. Die Beschattungsvorrichtung gemäß Fig. 12a und 12b weist ein flexibles Flächengebilde 5f auf, das aus einer Ruheposition, in der ein Auszugprofil 6f in einem unteren Randbereich eines Fensterausschnittes für die Seitenscheibe 2 abschließt, in Richtung einer aufgespannten Funktionsposition nach oben ausgezogen ist. In Fig. 12a ist eine teilweise ausgezogene Funktionsstellung des flexiblen Flächengebildes 5f dargestellt. In Fig. 12b ist die vollständig ausgezogene und aufgespannte Funktionsposition des Flächengebildes 5f gezeigt. Wie anhand der in die Fig. 12a und 12b integrierten Querschnittsdarstellungen einer seitlichen Führungsschiene 3f für das flexible Flächengebilde 5f und das Auszugprofil 6f dargestellt ist, sind in dem Hohlraum des Blendenprofils 9f der Führungsschiene 3f zwei über die Länge der Führungsschiene 3f erstreckte Klemmstäbe 18f vorgesehen, die sich in unbelastetem Ruhezustand parallel zur Längsrichtung der Führungsschiene 3f erstrecken. Die beiden Klemmstäbe 18f flankieren das flexible Flächengebilde 5f und das Auszugprofil 6f auf gegenüberliegenden Seiten. Jeder Seitenrand 12f des flexiblen Flächengebildes ist außenseitig mit einer Randverdickung versehen, auf die die Klemmstäbe 18f bei einer Überführung in ihre Klemmposition wirken können. Sobald das flexible Flächengebilde 5f seine vollständig ausgezogene Funktionsposition erreicht hat, wirkt ein Steuermittel 20 stirnseitig auf die Klemmstäbe 18f, die hierdurch elastisch gebogen werden. Die Biegung erfolgt aufgrund der stirnseitigen Stauchung der Klemmstäbe 18f seitlich nach außen. Im Blendenprofil 9f ist auf einer dem Längsschlitz zur Aufnahme des Auszugprofils 6f gegenüberliegenden Seite eine rinnenförmige Vertiefung vorgesehen, in die die Klemmstäbe 18f bei einer Biegung nach außen eintauchen können. Die Klemmstäbe 18f sind zudem derart geführt, dass sie sich bei einer Biegung nach außen auch aufeinanderzubewegen, wie dies anhand der Pfeile in der Querschnittsdarstellung gemäß Fig. 12b erkennbar ist. Hierdurch hintergreifen die Klemmstäbe 18f die Randverdickung des Seitenrandes 12f. Jeder Seitenrand 12f wird daher seitlich nach außen, d.h. quer zur Auszugrichtung, auf Zug belastet. Diese Spannung und Fixierung verhindert wie bei der Ausführungsform nach den Fig. 11a und 11b, dass die Seitenränder 12f bei auf das flexible Flächengebilde wirkenden Belastungen aus dem Blendenprofil 9f herausgezogen werden können. Es wird daher zuverlässig das Entstehen eines Sichtspaltes zwischen jeder Führungsschiene 3f und dem zugeordneten Seitenrand 12f des flexiblen Flächengebildes in seiner ausgezogenen Funktionsposition vermieden.

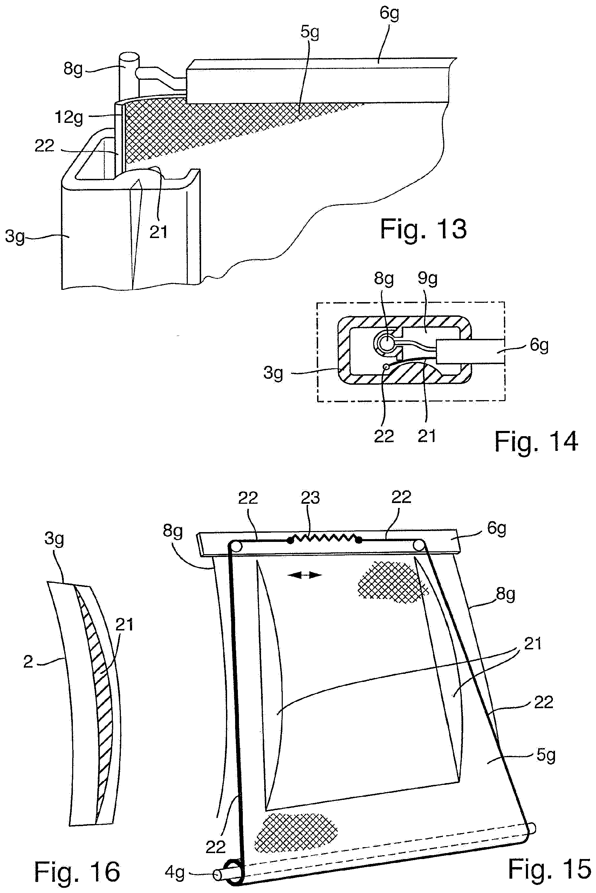

Bei der Ausführungsform gemäß den Fig. 13 bis 16 weist die Beschattungsvorrichtung ebenfalls ein flexibles Flächengebilde 5g auf, das an seinem vorderen Stirnendbereich mit einem formstabilen Auszugprofil 6g versehen ist. Das Auszugprofil 6g wird analog der zuvor beschriebenen Ausführungsformen mit Hilfe von Antriebsübertragungsmitteln 8g in gegenüberliegenden Führungsschienen 3g verlagert. Bei der Ausführungsform der Beschattungsvorrichtung nach den Fig. 13 bis 16 ist das flexible Flächengebilde 5g umlaufend mit einem als Spannmittel dienenden elastischen Spannzug 22, 23 versehen, der in den Seitenrändern 12g verläuft und im Verlauf des Auszugprofils 6g über entsprechende Umlenkmittel umgelenkt ist. Ein Federzugmittel 23 setzt den Spannzug 22 unter Vorspannung. Die Spannzuganordnung 22, 23 ist so gewählt, dass die Spannzuganordnung permanent unter Zugspannung steht. Bei einer nicht dargestellten Ausführungsform ist die Spannzuganordnung in aufgewickelter Ruheposition des Flächengebildes 5g oder auch während eines Ausfahrvorganges in Richtung der ausgezogenen Funktionsposition spannungslos. Eine Spannung wird erst dann aufgebracht, wenn das Auszugprofil 6g die vollkommen ausgezogene Funktionsposition erreicht hat, in der das flexible Flächengebilde die Seitenscheibe 2 vollständig überdeckt. Anschließend wird die Spannzuganordnung unter Zug gesetzt, wodurch die Seitenränder gespannt werden. Die Blendenprofile 9g innerhalb der Führungsschienen 3g sind innenseitig mit Überwölbungsabschnitten 21 versehen, die eine stärkere Wölbung aufweisen als der Verlauf der Führungsschienen. Dadurch werden bei einem Ausziehvorgang die entsprechenden Flächenabschnitte des Flächengebildes 5g im Bereich der Überwölbungsabschnitte 21 umgelenkt. Durch die Spannung der Spannzuganordnung 22, 23 wird das Flächengebilde zwangsläufig über diese Überwölbungsabschnitte 21 hinweg gespannt, wodurch sich zwangsläufig eine Querspannung auf das flexible Flächengebilde 5g einstellt.

Die übrigen Funktionsteile und Abschnitte der Beschattungsvorrichtung nach den Fig. 13 bis 16 entsprechen den zuvor beschriebenen Ausführungsformen. Funktionsgleiche Teile und Abschnitte sind mit den gleichen Bezugszeichen unter Hinzufügung des Buchstabens g versehen. Zur Vermeidung von Wiederholungen wird daher ergänzend auf die Beschreibung zu den zuvor angeführten Ausführungsformen verwiesen.

## Patentansprüche

1. Schutzvorrichtung, insbesondere Beschattungsvorrichtung, für einen Fahrzeuginnenraum eines Kraftfahrzeugs mit einem flexiblen Flächengebilde (5-5g), das zwischen einer kompakt abgelegten Ruheposition und wenigstens einer aufgespannten Funktionsposition beweglich gelagert ist, sowie mit seitlichen Führungsschienen (3-3g), die in fahrzeugfest montierter Betriebsstellung nichtparallel zueinander verlaufen und in denen ein Auszugprofil (6-6g) des Flächengebildes geführt ist, wobei jede Führungsschiene ein Blendenprofil (9-9g) zum Überdecken eines Seitenrandes des aufgespannten Flächengebildes umfasst, wobei das Blendenprofil (9-9g) einen längserstreckten Führungsschlitz für den Seitenrand (12-12g) des Flächengebildes (5-5g) bildet, dessen Breite so groß gewählt ist, dass der Seitenrand über seine gesamte Länge in aufgespannter Funktionsposition des Flächengebildes in das Blendenprofil hineinragt, **dadurch gekennzeichnet, dass** der Führungsschlitz (11a, 11b) in seiner Längsrichtung und in seiner Querrichtung trichterförmig verjüngt ist.

2. Schutzvorrichtung nach Anspruch 1, **dadurch gekennzeichnet, dass** jedem Seitenrand (12c, 12d) des Flächengebildes ein seitliches Führungsband (13, 13d) zugeordnet ist, das über die Länge des jeweiligen Seitenrandes erstreckt ist, und dass das Blendenprofil (9c, 9d) ein das Führungsband aufnehmendes Führungsprofil (15c, 15d) umfasst, in dem das Führungsband (13, 13d) permanent verbleibt.

3. Schutzvorrichtung nach Anspruch 2, **dadurch gekennzeichnet, dass** ein Aufnahmequerschnitt des Führungsprofils (15) in Querrichtung des Führungsbandes (13) eine Breite aufweist, die um einen Ausgleichsweg breiter ist als eine Breite des Führungsbandes, wobei der Ausgleichsweg als Funktion des Winkels der nichtparallelen Führungsschienen (3c) zur Auszugrichtung des Flächengebildes bestimmt ist.

4. Schutzvorrichtung nach Anspruch 2, **dadurch gekennzeichnet, dass** das Hohlprofil (15d) in Querrichtung beweglich gelagert ist, und dass Federmittel (17) vorgesehen sind, die auf das Hohlprofil (15d) eine Federspannung in Querrichtung nach außen ausüben.

5. Schutzvorrichtung nach einem der vorhergehenden Ansprüche, **dadurch gekennzeichnet, dass** in dem Blendenprofil (9e, 9f) Klemmmittel (18, 18f) vorgesehen sind, die den Seitenrand (12e, 12f) des Flächengebildes in ausgefahrener Funktionsposition in Querrichtung festklemmen, wobei die Klemmmittel wenigstens eine in Querrichtung bewegliche Klemmleiste (18, 18f) umfassen, die sich innerhalb des Blendenprofils (9e, 9f) zumindest weitgehend über eine Auszuglänge des Flächengebildes erstreckt.

6. Schutzvorrichtung nach einem der vorhergehenden Ansprüche, **dadurch gekennzeichnet, dass** die beiden Seitenränder (12g) des Flächengebildes über ihre Länge mit längserstreckten elastischen Spannmitteln (22, 23) versehen sind, die in Längsrichtung der Seitenränder (12g) wirksam sind, dass stationäre Überwölbungsabschnitte (21) vorgesehen sind, über die das Flächengebilde (5g) in aufgespannter Funktionsposition erstreckt ist, und dass die elastischen Spannmittel (22, 23) in ausgezogener Funktionsposition jeweils außenseitig an den Überwölbungsabschnitten (21) vorbeigeführt sind.

7. Schutzvorrichtung nach Anspruch 6, **dadurch gekennzeichnet, dass** die Überwölbungsabschnitte (21) im Bereich der Blendenprofile (9g) der gegenüberliegenden Führungsschienen (3g) angeordnet sind.

## Claims

1. Protective device, in particular shading device, for a vehicle interior of a motor vehicle, having a flexible planar structure (5-5g), mounted to be displaced between a compactly stowed rest position and at least one deployed functional position, and having lateral guide rails (3-3g) extending non-parallel to each other in the operating condition installed fixed to the vehicle and in which rails a pull-out profile (6-6g) of the planar structure is guided, wherein each guide rail comprises a cover profile (9-9g) for covering a lateral edge of the deployed planar structure, wherein the cover profile (9-9g) forms a lengthwise extended guide slot for the lateral edge (12-12g) of the planar structure (5-5g), with the width thereof selected such that the lateral edge projects into the cover profile over its entire length in the deployed functional position of the planar structure,
**characterized in that**
the guide slot (11a, 11b) in its longitudinal direction and in its transverse direction is tapering in a funnel shape.

2. Protective device according to claim 1, **characterized in that** each lateral edge (12c, 12d) of the planar structure is associated with a lateral guide band (13, 13d) extending over the length of the respective lateral edge, and **in that** the cover profile (9c, 9d) comprises a guide profile (15c, 15d) receiving the guide band, in which the guide band (13, 13d) remains permanently.

3. Protective device according to claim 2, **characterized in that** an accommodation cross section of the guide profile (15) in the transverse direction of the guide band (13) has a width that is wider by a compensation path than a width of the guide band, wherein the compensation path is determined as a function of the angle of the non-parallel guide rails (3c) to the pull-out direction of the planar structure.

4. Protective device according to claim 2, **characterized in that** the hollow profile (15d) is mounted to be displaced in the transverse direction, and **in that** spring means (17) are provided to apply a spring tension outwards in the transverse direction to the hollow profile (15d).

5. Protective device according to any of the preceding claims, **characterized in that** clamping means (18, 18f) are provided in the cover profile (9e, 9f), which fixedly clamp the lateral edge (12e, 12f) of the planar structure in the moved-out functional position in the transverse direction, wherein the clamping means comprise at least one clamp strip (18, 18f) movable in the transverse direction, which strip extends within the cover profile (9e, 9f) at least largely over a pull-out length of the planar structure.

6. Protective device according to any of the preceding claims, **characterized in that** the two lateral edges (12g) of the planar structure are provided, over their length, with lengthwise extended elastic tensioning means (22, 23) which are effective in the longitudinal direction of the lateral edges (12g), **in that** stationary vaulting portions (21) are provided, across which portions the planar structure (5g) is extended in a deployed functional position, and **in that** the elastic tensioning means (22, 23) in a pulled-out functional position are each guided past the vaulting portions (21) on the outer side.

7. Protective device according to claim 6, **characterized in that** the vaulting portions (21) are disposed in the vicinity of the cover profiles (9g) of the opposite guide rails (3g).

## Revendications

1. Dispositif de protection, en particulier dispositif d'ombrage, pour un habitacle de véhicule d'un véhicule automobile, avec une structure plane flexible (5-5g), montée de façon mobile entre une position de repos compactement entreposée et au moins une position fonctionnelle déployée, ainsi qu'avec des rails de guidage (3-3g) latéraux, s'étendant non-parallèles l'un à l'autre installés en condition de fonctionnement fixés au véhicule et dans lesquels un profilé d'extraction (6-6g) de la structure plane est guidé, dans lequel chaque rail de guidage comprend un profilé d'écran (9-9g) pour recouvrir un bord latéral de la structure plane déployée, dans lequel le profilé d'écran (9-9g) forme une fente de guidage s'étendant longitudinalement pour le bord latéral (12-12g) de la structure plane (5-5g), la largeur de la fente choisi de telle sorte que le bord latéral avance dans le profilé d'écran sur toute sa longueur dans la position fonctionnelle déployée de la structure plane,
**caractérisé en ce que**
la fente de guidage (11a, 11b) dans sa direction longitudinale et dans sa direction transversale se diminue en forme d'entonnoir.

2. Dispositif de protection selon la revendication 1, **caractérisé en ce qu'**une bande de guidage (13, 13d) latérale est associée à chaque bord latéral (12d, 12d) de la structure plane, la bande s'étendant sur la longueur du bord latéral respectif, et **en ce que** le profilé d'écran (9c,9d) comprend un profilé de guidage (15c, 15d) recevant la bande de guidage, dans lequel profilé la bande de guidage (13, 13d) reste en permanence.

3. Dispositif de protection selon la revendication 2, **caractérisé en ce qu'**une section transversale de logement du profilé de guidage (15) dans la direction transversale de la bande de guidage (13) présente une largeur qui surpasse une largeur de la bande de guidage par une voie de compensation, dans lequel la voie de compensation est définie en fonction de l'angle des rails de guidage (3c) non-parallèles à la direction d'extraction de la structure plane.

4. Dispositif de protection selon la revendication 2, **caractérisé en ce que** le profilé creux (15d) est monté de façon mobile dans la direction transversale, et **en ce que** moyens à ressort (17) sont prévus appliquant une tension de ressort au profilé creux (15d) dans la direction transversale vers l'extérieur.

5. Dispositif de protection selon l'une quelconque des revendications précédentes, **caractérisé en ce que** des moyens de serrage (18, 18f) sont prévus dans le profilé d'écran (9e, 9f) serrant fixement dans la direction transversale le bord latéral (12e, 12f) de la structure plane dans la position fonctionnelle extrait, dans lequel les moyens de serrage présentent au moins une barrette de serrage (18, 18f) mobile dans la direction transversale, s'étendant au sein du profilé d'écran (9e, 9f) au moins largement sur une longueur d'extraction de la structure plane.

6. Dispositif de protection selon l'une quelconque des revendications précédentes, **caractérisé en ce que** les deux bords latéraux (12g) de la structure plane sur leur longueur sont prévus de moyens de tension (22, 23) élastiques s'étendant longitudinalement, qui sont efficaces dans la direction longitudinale des bords latéraux (12g), **en ce que** des sections voûtées (21) stationnaires sont prévues sur lesquelles la structure plane (5g) s'étend dans la position fonctionnelle déployée, et **en ce que** les moyens de tension (22, 23) élastiques dans la position fonctionnelle extrait respectivement passent à côté extérieur le long des sections voûtées (21).

7. Dispositif de protection selon la revendication 6, **caractérisé en ce que** les sections voûtées (21) sont arrangées à proximité des profilés d'écran (9g) des rails de guidage (3g) opposés.
